# EUROPÄISCHE PATENTSCHRIFT

(11) **EP 2 708 275 B1**
(45) Veröffentlichungstag und Bekanntmachung des Hinweises auf die Patenterteilung: **01.02.2017**
(21) Anmeldenummer: 13004315.1
(22) Anmeldetag: 03.09.2013
(51) Int. Cl.: B01D 53/26, C01B 3/50, C10K 3/00, F02C 3/28, F02C 3/30

(54) **VERFAHREN ZUM BETREIBEN ZWEIER TEILPROZESSE MIT UNTERSCHIEDLICHEN WASSERDAMPFANFORDERUNGEN IN EINEM GESAMTPROZESS MIT EINER WASSERDAMPFSELEKTIVEN MEMBRAN**
METHOD FOR OPERATING TWO SUB-PROCESSES WITH DIFFERENT STEAM REQUIREMENTS IN AN OVERALL PROCESS WITH A WATER VAPOUR SELECTIVE MEMBRANE
PROCEDE DE FONCTIONNEMENT DE DEUX PROCEDES PARTIELS AYANT DES EXIGEANCES DIFFÉRENTES EN TERMES DE VAPEUR D'EAU DANS UN PROCÉDÉ GLOBAL AVEC UNE MEMBRANE SÉLECTIVE À LA VAPEUR D'EAU

(30) Priorität: 14.09.2012 DE 102012018163
(43) Veröffentlichungstag der Anmeldung: 19.03.2014
(73) Patentinhaber: Forschungszentrum Jülich GmbH, 52425 Jülich (DE)
(72) Erfinder: Schiebahn, Sebastian, 52382 Niederzier (DE); Riensche, Ernst, 52428 Jülich (DE); Zhao, Li, 52428 Jülich (DE); Weber, Michael, 52076 Aachen (DE); Stolten, Detlef, 52499 Baesweiler (DE)

(56) Entgegenhaltungen:
- DE-A1-102010 024 429
- US-A1- 2005 072 425
- US-A1- 2005 284 290
- US-B1- 6 610 122
- SIJBESMA ET AL: "Flue gas dehydration using polymer membranes", JOURNAL OF MEMBRANE SCIENCE, ELSEVIER SCIENTIFIC PUBL.COMPANY. AMSTERDAM, NL, Bd. 313, Nr. 1-2, 19. Januar 2008 (2008-01-19), Seiten 263-276, XP022526552, ISSN: 0376-7388, DOI: 10.1016/J.MEMSCI.2008.01.024

## Beschreibung

Die Erfindung betrifft ein Verfahren zum Betreiben eines ersten Teilprozesses innerhalb eines Gesamtprozesses, wobei dieser Teilprozess prozessbedingt mit weniger Wasserdampf betrieben wird, als im Eduktstrom zu diesem Teilprozess vorhanden ist, und wobei der Wasserdampf an anderer Stelle, das bedeutet für einen zweiten Teilprozess, vorteilhaft benötigt wird. Ein solcher erster Teilprozess kann beispielsweise eine Kaltgaswäsche bei der Aufreinigung von Synthesegas sein. In der Regel bedarf es einer Abtrennung zumindest eines Teils des Wasserdampfes aus dem Eduktstrom, bevor dieser dem Teilprozess zugeführt wird.

### Stand der Technik

In vielen Verfahrenskonzepten spielt der Wasserhaushalt eine entscheidende Rolle, z. B. da Wasserdampf in chemischen Reaktionen benötigt wird bzw. dort entsteht oder auch Wasser in der Atmosphäre erwünscht bzw. unerwünscht ist. Die Erzeugung von Wasserdampf ist aufgrund der hohen Verdampfungsenthalpie ein sehr energieintensiver Prozess, dessen Aufwand den Wirkungsgrad des Prozesses erheblich reduziert. Häufig geht Wasserdampf als Abgas oder durch Kondensation verloren, so dass die investierte Enthalpie verloren geht, ohne daraus Nutzen gezogen zu haben.

Bislang wurde der Wasserhaushalt innerhalb eines Prozesses in der Regel durch das Aufsättigen mit Wasserdampf in einem Sättiger (Steigerung des Dampfgehaltes) oder durch Kühlung und Kondensation (Senkung des Dampfgehaltes) reguliert. In diesen Fällen wird hochwertige Energie in den Prozess zur Dampferzeugung investiert, während gleichzeitig an anderen Stellen im Prozess Dampf im Abgas verloren geht oder auf einem niedrigeren Temperaturniveau als bei der Dampferzeugung auskondensiert wird. Das heißt, dass selbst bei einer integrierten Abwärmenutzung ein hoher Anteil der exergetischen Wertigkeit verloren geht. Zusätzlich muss zur Kondensation von Wasser der gesamte Prozessstrom gekühlt werden, was mit zusätzlichem Aufwand und Wirkungsgradverlust einhergeht.

Betrachtet wird ein Gesamtprozess, bei dem es einen Teilprozess gibt, in dem ein Gasstrom keinen bzw nur einen niedrigen Wasserdampfanteil haben darf oder prozessbedingt unter die Sättigungstemperatur abgekühlt werden muss, was zum Auskondensieren von Wasserdampf führt. Gleichzeitig umfasst der Gesamtprozess einen weiteren Prozess, bei dem der Dampf wieder benötigt bzw. von Vorteil ist.

Eine solche Situation ist beispielsweise bei einer physikalischen oder auch einer chemischen Wäsche von Produktgasen gegeben und insbesondere bei der so genannten Kaltgasreinigung. Im Unterschied zur Heißgasreinigung im Temperaturbereich von 400 - 750°C versteht man unter einer Kaltgasreinigung eine mehrstufige Abscheidetechnologie bei Temperaturen unter 200 °C, wobei häufig zunächst Partikel oder auch andere unerwünschte Substanzen aus dem Gasstrom abgeschieden werden. Bekannte Gasreinigungstechnologien sind z. B. die physikalischen Wäschen Selexol™ Rectisol^{®} oder auch die chemische Rauchgasreinigung mit MEA (Monoethanolamin) oder MDEA (Methyldiethanolamin), die zur Abtrennung CO₂ und teilweise auch von H₂S (Entschwefelung) eingesetzt werden. Die Gasreinigungsprozesse arbeiten bevorzugt bei niedrigen Temperaturen (z. B. MDEA ∼ 40 °C, Rectisol ∼-60 °C), weshalb sie auch Kaltgasreinigungsstufen genannt werden.

Rohgase oder Synthesegase nach der Vergasung enthalten je nach Typ, und insbesondere nach Wasserwäschen, einen erhöhten Dampfanteil. Das gilt beispielsweise auch für Produktgase nach einem CO-Shift-Reaktor. Typischerweise liegt das zu reinigende Gas bei der entsprechenden Temperatur mit Wasser gesättigt vor. Bei der Vergasung im IGCC weist das Prozessgas (Synthesegas) je nach Konzept Temperaturen zwischen 100 und 300 °C auf.

In der Regel wird das Rohgas oder Synthesegas einer konventionellen Wäsche zwecks Entschwefelung unterzogen. Nur ein kleiner Teil der theoretisch nutzbaren Wärme wird in einem Wärmeaustauscher an den trockenen Produktstrom übertragen, Der größte Anteil geht im Kondensator verloren, der neben der Kühlung von hier 122 °C auf 40 °C [Kloster] auch die große Menge an Kondensationswärme abführen muss (Verhältnis Kondensationswärme/gesamter Kühlungsbedarf = 60 %). Für eine Anwendung im IGCC ist es sogar sehr wichtig, dass der Produktstrom einen erhöhten Anteil Dampf enthält, da dieser in der Gasturbine als Inertgas zur NOₓ-Reduktion benötigt wird. Außerdem steigt der Massenstrom des Brenngases und somit die abgreifbare Leistung der Gasturbine. Die Erhöhung des Wasseranteils wird in der Regel durch einen Sättiger durchgeführt und ist aufgrund des niedrigen Wasseranteils des Produktstroms sehr energieintensiv.

Bei der notwendigen Abkühlung des Prozessstroms auf die für die Wäsche erforderliche niedrigere Temperatur wird in der Regel ein sehr großer Teil dieses Wassers auskondensiert. Der Kühlaufwand ist entsprechend groß und die Wärme kann meistens aufgrund des niedrigen Temperaturniveaus nicht sinnvoll genutzt werden.

Selbst wenn die Kühlung als Rekuperator ausgeführt wird, kann aufgrund der Pinchtemperatur und der unterschiedlichen Wärmekapazitäten regelmäßig nur ein kleiner Teil der Wärme zurück gewonnen werden. Als Pinchtemperatur wird hier die minimale Temperaturdifferenz zwischen der warmen und der kalten Seite innerhalb des Wärmeaustauschers definiert,

Die große Menge an regelmäßig nicht nutzbarer Wärme, die im Kondensator abgeführt werden muss, ist der Hauptgrund, warum Kaltgasreinigungsverfahren den Wirkungsgrad eines Prozesses so stark reduzieren.

Eine wesentliche Anforderung an eine Wasserdampf leitende Membran ist eine hohe Selektivität für Wasserdampf gegenüber den anderen beteiligten Komponenten. Der im Einzelfall erforderliche Wert ist abhängig von der Anwendung, wobei die tolerierbaren zusätzlichen Permeatströme maßgebend sind.

Zudem ist generell eine hohe Permeabilität für Wasserdampf erstrebenswert, da dadurch das Membranmodul kleiner gebaut werden kann, was zu Kostenersparnis und weniger Druckverlust führt. Die Gaspermeabilität P wird in der Regel über die Einheit Barrer definiert, wobei ein Barrer definiert ist als die Durchflussrate (in m³ s⁻¹) durch das Material, multipliziert mit seiner Dicke (m), geteilt durch die durchströmte Fläche (m²) und durch die Druckdifferenz. Beeinflusst wird die Permeabilität sowohl von der Art des Permeates als auch durch Druck, Temperatur, Dicke des Feststoffes und der Flächengröße. In der Lecksuchtechnik gibt man die Durchflussrate (Permeationsrate) in hPa·l/s bzw, Pa·m³/s an.

Bei der Auslegung eines Membranmoduls müssen mehrere Aspekte beachtet werden. Zum einen muss aus wirtschaftlicher Sicht beurteilt werden, bis zu welcher Größe der Membranfläche der energetische Gewinn durch zusätzlich gewonnenen Dampf die finanziellen Mehrkosten durch die erhöhte Membranfläche überwiegt. Als zweites spielt die Selektivität für die verfahrenstechnische Auslegung eine entscheidende Bedeutung. So kann der maximale Dampfübertragungsgrad auch dadurch begrenzt sein, dass eine unerwünschte Co-Permeation, wie z, B. von Verunreinigungen wie H₂S, unterhalb eines gewissen Grenzwertes liegen soll.

Die Membran sollte chemisch stabil gegenüber allen beteiligten Komponenten sein, um sie einsetzen zu können und Alterungseffekte zu minimieren. Wichtig für die in Frage kommenden Anwendungen, ist der Temperaturbereich, in dem die Membran betrieben werden kann. Generell ist ein weiter Bereich (insbesondere zu höheren Temperaturen) günstig, da so das Anwendungspotential des Wasserdampftransportes verbreitert werden kann. In jedem Fall muss die Temperatur an jeder Stelle der Membran oberhalb der jeweiligen Kondensationstemperatur liegen, um die Vorteile des Wasserdampftransportes zu erhalten.

Die Wirtschaftlichkeit einer Membran ist dabei von zwei Faktoren abhängig. Einerseits gibt die Selektivität der Membran ihre Fähigkeit an, zwischen zwei unterschiedlichen Materialien, z. B. zwei unterschiedlichen Molekülsorten in einem Gasstrom unterscheiden zu können. Andererseits bestimmt die Leistungsfähigkeit der Membran unter bestimmten Randbedingungen den zu erzielenden Permeatfluss.

Bislang können zum Zwecke der Wasserdampfverschiebung am besten Polymermembranen eingesetzt werden. Sie besitzen eine hohe Selektivität und Permeabilität für Wasserdampf und haben ihre Einsetzbarkeit bewiesen. Als maximale obere Grenze der Einsatztemperatur von Polymermembranen wird heute 250 °C genannt. Generell sind alle heute bekannten Polymermembranen Wasserdampf-permeabel.

Bei der Auswahl von geeigneten Membranmaterialien ist sowohl die Wasserdampf-Permeabilität als auch die Selektivität gegenüber den anderen Gasen (hauptsächlich H₂, N₂, H₂O_{,} CO₂, CO, aber auch H₂S) von Bedeutung. Die Permeabilität multipliziert mit der Membrandicke hat einen großen Einfluss auf die benötigte Membranfläche. Die Selektivität ist entscheidend dafür, wie viel von den anderen Komponenten mit hindurch permeiert. Dabei erzielen heutige Polymermembranen bereits sehr gute Werte hinsichtlich der Wasserdampfpermeabilität bei gleichzeitig hoher Selektivität von Wasserdampf gegenüber anderen Komponenten. So werden Permeabilitäten von über 10⁵ Barrer bei gleichzeitiger Selektivität gegenüber N₂ von ebenfalls 10⁵ erreicht.

Bekannte poröse Membranen können für höhere Temperaturbereiche bis hin zu ca. 550 °C eingesetzt werden. Aufgrund des starken Dipolcharakters ist das Wasserdampfmolekül extrem klein (kinetischer Durchmesser 0,265 nm), sogar kleiner als das H₂-Molekül (kinetischer Durchmesser 0,289 nm), so dass eine Trennung über die Molekülgröße/Porengröße erfolgen kann. Die Entwicklung solcher Membranen ist bislang kein eigener Forschungsschwerppnkt. Bisher ist die Entwicklung poröser Membranen auf die selektive Abtrennung von CO₂ oder H₂ fokussiert.

Neuere Entwicklungen zeigen den Einsatz einer Graphen-basierten Membran, die ideal-selektiv und mit hoher Permeanz wasserdampfdurchlässig ist [Nair 2012]. Unter der Permeanz wird dabei der Kehrwert des Membranwiderstandes verstanden. Dementsprechend ergibt das Produkt aus Permeanz und Dicke der aktiven Schicht der Membran die Permeabilität der Membran an, welches eine Materialeigenschaft der Membran darstellt.

### Aufgaben und Lösung der Erfindung

Der Erfindung liegt die Aufgabe zu Grunde ein Verfahren zum Betreiben eines ersten Teilprozess im Rahmen eines Gesamtprozesses bereit zu stellen, wobei vor bzw. bei dem ersten Teilprozess der Wasserdampfanteil des zugeführten Eduktstroms abgesenkt werden muss, und gleichzeitig ein weiterer zweiter Teilprozess Wasserdampf benötigt, und welches einen gegenüber dem Stand der Technik verbesserten Wirkungsgrad und gegebenenfalls verminderten apparativen Aufwand aufweist. Die notwendige Wasserdampfabsenkung kann dabei beispielsweise auch auf Grund einer Temperaturabsenkung erfolgen, so dass die Sättigungsgrenze von Wasserdampf bei der vorliegenden Temperatur überschritten wird.

Die Aufgabe der Erfindung wird gelöst durch ein Verfahren mit den Merkmalen gemäß Hauptanspruch. Vorteilhafte Ausgestaltungen des Verfahrens finden sich in den davon abhängigen Unteransprüchen wieder.

### Gegenstand der Erfindung

In dieser Anmeldung wird die Verwendung einer Wasserdampf-selektiven Membran zur Verschiebung von Wasserdampfströmen innerhalb eines Gesamtprozesses und insbesondere vor einem Teilprozess vorgeschlagen, bei dem vorgesehen ist, dass vor dem oder bei dem Teilprozess der Wasserdampfanteil im Eduktstrom abgesenkt werden muss. Dies kann beispielsweise erforderlich sein, wenn bei dem ersten Teilprozess kein, bzw. nur ein niedriger Wasserdampfanteil benötigt wird, und somit entsprechend durch den Eduktstrom auch nur wenig Wasserdampf zugeführt werden sollte, Dies kann aber auch erforderlich sein, wenn beispielsweise der erste Teilprozess bei einer Temperatur betrieben wird, die unterhalb der Sättigungstemperatur des Eduktstroms liegt, und es somit bei Abkühlung des zugeführten Eduktstroms auf die Temperatur des Teilprozesses zu einer unerwünschten Auskandensation von Wasserdampf führen würde.

Das erfindungsgemäße Verfahren bewirkt, dass die Aufsättigung und Kondensation von wasserhaltigen Gasströmen auf ein Minimum reduziert und somit der energetlsche Wirkungsgrad erheblich gesteigert werden kann, wobei potenziell auch gleichzeitig der anlagentechnische Aufwand reduziert werden kann.

Dabei kann prinzipiell zwischen drei Einsatzgebieten für die Verwendung einer wasserdampfselektiven Membran unterschieden werden:
- als Wasserdampfbypass: Ein Teilprozess soll/muss mit niedrigerem Wasserdampfgehalt betrieben werden, so dass dieser Teil überbrückt werden muss (downstream);
- als Wasserdampfrezirkulation: Ein Teilprozess soll/muss mit einem Wasserdampfgehalt betrieben werden, der nicht bzw. nicht vollständig verbraucht wird, so dass der überschüssige Wasserdampf möglichst vollständig intern rezirkuliert werden sollte (upstream, somit Wasserdampfrekuperierung);
- als Wasserdampfrückgewinnung: Ein Strom, der einen Teilprozess verlässt, enthält einen frei verfügbaren Wasserdampfanteil, der in einem anderen Strom nutzbringend verwendet werden kann. Dies kann auch prozess- oder anlagenübergreifend sein.

In dieser Anmeldung wird die Verwendung einer wasserdampfselektiven Membran als Dampfbypass vor einem ersten Teilprozess vorgeschlagen. Eine wasserdampfselektive Membran ist eine solche, die hochselektiv Wasserdampf permeieren lässt und die restlichen Komponenten zurückhält. Unter "hochselektiv" wird im Rahmen dieser Erfindung verstanden, dass die Selektivität für Wasserstoff wenigstens 50 mal größer ist gegenüber jeweils allen übrigen Komponenten, beispielsweise CO₂ oder N₂, insbesondere sogar 200 mal größer und besonders vorteilhaft sogar mehr als 200 mal größer. Eine dafür geeignete Membran weist Permeabilitäten von wenigstens 10⁵ Barrer bei gleichzeitiger Selektivität gegenüber N₂ von wenigstens 10⁵ auf. Dafür geeignet sind insbesondere Polymermembranen und poröse Membranen, bei denen die Triebkraft für die Permeation die Differenz der Partialdrücke des Wasserdampfes auf beiden Seiten der Membran ist.

Die Erfindung beschreibt einen allgemeinen Prozess (Gesamtprozess), in dem es einen ersten Teilprozess und einen dahin führenden Gasstrom (Eduktstrom) gibt, bei dem vorgesehen ist, dass vor dem oder bei dem Teilprozess der Wasserdampfanteil im Eduktstrom abgesenkt werden muss. Dies ist insbesondere der Fall, wenn der Gasstrom für den ersten Teilprozess kein oder nur einen geringen Dampfanteil aufweisen darf oder prozessbedingt bis unterhalb der Sättigungstemperatur abgesenkt werden müsste. Gleichzeitig existiert im Gesamtprozess ein zweiter Teilprozess, der einen wasserdampfhaltigen Gasstrom (Produktstrom) benötigt. Ein wasserdampfhaltiger Produktstrom kann beispielsweise als Inertgas benötigt werden, um einen Massenstrom zu erhöhen, um die Wärmekapazität zu steigern oder um eine chemische Reaktion zu verlangsamen oder zu behindern. Anwendungsbeispiele für einen solchen wasserdampfhaltigen Produktstrom für einen zweiten Teilprozess sind beispielsweise die Verringerung bzw. Verhinderung der NOx-Bildung oder der Rußbildung.

Erfindungsgemäß ist vorgesehen, dass bezogen auf den ersten Teilprozess eine wasserdampf-selektive Membran zwischen dem dampfhaftigen Eduktstrom und dem diesen Teilprozess verlassenden, dampfarmen Produktstrom angeordnet ist, so dass ein großer Teil des für den ersten Teilprozess nicht benötigten Übersehussdampfes an diesem vorbeigeschleust werden kann (Bypass), und auf einen großen Kondensator und zusätzliche Wärmeaustauscher im Idealfall verzichtet werden kann. Sofern dennoch ein zusätzlicher Kondensator und/oder ein Wärmetauscher benötigt werden, können diese zumindest deutlich kleiner ausfallen, als nach dem Stand der Technik bekannt ist.

Die in dieser Anmeldung beschriebenen Membranmodule sind in der Regel für einen maximalen Stoffaustausch ausgelegt. Eine vorteilhafte Ausgestaltung sieht ein Gegenstromprinzip vor. Andere Anordnungen, wie Kreuz- und Gleichstrom, sind jedoch ebenfalls möglich. Die Ausgestaltung über Kreuzstrom zeichnet sich beispielsweise durch konstruktiv einfache Zufuhr und Verteilung der ein- und austretenden Gasströme an einem Membranmodul aus.

Ein Wasserdampfaustausch über ein Membranmodul bietet aufgrund des engen Kontaktes der beiden Ströme neben dem reinen Wasserdampfaustausch auch die Möglichkeit des Wärmeaustausches. Dadurch können bei geeigneter Anwendung beide Aufgaben mit nur einem Bauteil durchgeführt werden. Im Allgemeinen gilt: Je weiter der Temperaturbereich der Membran ist, umso mehr kann die Membran auch zum Wärmeaustausch beitragen.

Die Vorteile der erfindungsgemäßen Verfahrensführung sind folgende. Einerseits wird der Aufwand für die notwendige Wasserabtrennung aus dem Eduktstrom vor dem ersten Teilprozess durch Abkühlung und/oder Kondensation von Wasserdampf vermieden bzw. deutlich reduziert. Andererseits ist im weiteren Prozessverlauf für den zweiten Teilprozess eine nur geringe bzw. gar keine weitere Frischdampfzuführung notwendig. Vorteilhaft weist der mit Hilfe der Membran übertragene Wasserdampf bereits ein deutlich höheres Energieniveau auf. Die Übertragung vom Dampf mit Hilfe eines Membranmoduls mit einer wasserdampfselektiven Membran ist somit deutlich energieeffizienter, als wenn nach einer vorherigen Abkühlung und Kondensation dieselbe Wassermenge erneut verdampft werden müsste.

In einer besonderen Ausführungsform der Erfindung, bei der eine Kaltgasreinigung als ein erster Teilprozess vorgesehen ist, kann die Wassermenge aus dem Eduktstrom, die vorab auskondensiert werden muss, im Vergleich zum bisherigen Stand der Technik vorteilhaft auf ca. 4 % reduziert werden.

Mit einer selektiv Wasserdampf leitenden Membran kann vorteilhaft eine Überbrückung eines kalten bzw. dampfarmen Prozessteils als einen ersten Teilprozess stattfinden, wobei der nicht benötigte Dampf über die Membran direkt an einen Produktstrom übergeben wird, der in einem zweiten Teilprozess, z. B, einer Gasturbine, benötigt wird.

Dadurch kann auf einen Kondensator vor dem ersten Teilprozess entweder ganz verzichtet werden, oder aber die trotzdem noch abzuführende Wärmemenge im Kondensator vor dem ersten Teilprozess fällt wesentlich kleiner aus, so dass die Baugröße des Kondensators deutlich verringert werden kann.

Ferner kann durch den erfindungsgemäßen Bypass über eine Wasserdampf leitende Membran vor dem ersten Teilprozess insbesondere der Wassergehalt des Produktgases bei gleicher oder sogar gesteigerter Endtemperatur vorteilhaft erhöht werden.

Bei entsprechender Auslegung ist es auch möglich, die Wasserdampf leitende Membran und den Wärmetauscher zu einem Bauteil zu kombinieren. Ein Dampfaustausch über ein Membranmodul bietet aufgrund des engen Kontaktes der beiden Ströme neben dem reinen Dampfaustausch auch die Möglichkeit des Wärmeaustausches. Dadurch können bei geeigneter Anwendung beide Aufgaben mit nur einem Bauteil durchgeführt werden. Im Allgemeinen gilt: Je weiter der Temperaturbereich der Membran Ist, umso mehr kann die Membran auch zum Wärmetausch beitragen.

Neben dem minimierten Energiebedarf für die Dampfbereitstellung für einen zweiten Teilprozess kann vorteilhaft auf eine Kühlung zur Wasserrückgewinnung vor den ersten Teilprozess verzichtet werden bzw. deutlich geringer ausfallen. Dadurch bleibt die Wärme des übertragenen Wasserdampfes auf einem erhöhten Temperaturniveau, so dass der exergetlsche Wirkungsgrad Insgesamt steigt. Gleichzeitig wird die Wasserbilanz des Gesamtsystems optimiert, was bei wasserautarken Systemen von Bedeutung sein kann.

### Spezieller Beschreibungsteil

Nachfolgend wird die Erfindung anhand von einigen Figuren verdeutlicht, ohne dass dadurch eine Einschränkung des Schutzbereiches bewirkt werden soll. Es zeigen:
- Figur 1:: Prinzipielle Funktionsweise einer konventionellen Wäsche zwecks Entschwefelung eines wasserdampfhaltigen Rohgases als erster Teilprozess in einem IGCC-Gesamtprozess (IGCC = (integrated gasification combined cycle);
- Figur 2:: Prinzipielle Funktionsweise einer erfindungsgemäß angeordneten selektiv Wasserdampf leitenden Membran vor und nach einem ersten Teilprozess, bei dem der Wasserdampfanteil bzw. die Temperatur des Eduktstroms herabgesenkt werden muss;
- Figur 3:: Erfindungsgemäße Einbettung einer selektiv Wasserdampf leitenden Membran als Dampfbypass vor/nach einer physikalischen Wäsche, z. B. einer Entschwefelung, in einem Gesamtprozess;
- Figur 4:: Simulation der Wasserdampf-Partialdrücke entlang der wasserdampfselektiven Membran

In den Figuren bedeuten:
- Eduktstrom: wasserdampfreicher Gasstrom, der zu dem ersten Teilprozess geleitet wird,
Produktstrom wasserdampfarmer Gasstrom, der den ersten Teilprozess verlässt,
- p₁: Wasserdampf-Partialdruck im Eduktstrom vor dem Membranmodul in [Pa],
- p₁ - Δp₁: Wasserdampf-Partialdruck im Eduktstrom nach dem Membranmodul in [Pₐ],
- p₂: Wasserdampf-Partialdruck im Produktstrom vor dem Membranmodul in [Pa],
- p₂ + Δp₂: Wasserdampf-Partialdruck im Produktstrom nach dem Membranmodul in [Pa],
wobei Δp₁ in der Regel ungleich Δp₂ ist, da zwar die absolute Masse des durch die Membran permeierten Wasserdampfs auf der Permeatseite (Produktseite) und der Retentatseite (Eduktseite) identisch ist, aber auf Grund der unterschiedlichen Molenströme des Eduktstroms und des Produktstroms regelmäßig zu unterschiedlichen Partialdrücken Δp führt. Ferner sind Wärmeaustauscher mit WT, Kondensatoren mit K und Sättiger mit S gekennzeichnet.

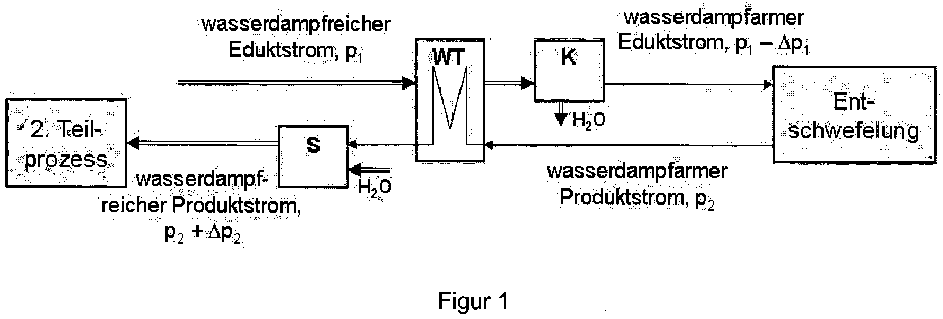

In der Figur 1 ist schematisch ein Teil einer herkömmlichen IGCC (= Integrated Gasification Combined Cycle)-Anlage (Gesamtprozess) dargestellt, bei dem in einer Ausführung als erster Teilprozess eine konventionelle Nasswäsche als Entschwefelung für ein dampfhaltiges Rauchgas vorgesehen ist. Das Rohrauchgas wird nach einer Staubabscheidung (nicht dargestellt) zur Entschwefelung in einen Wäscher geleitet, in dem der in dem Rohgas vorhandene Schwefel als H₂S in der Waschlösung gelöst wird. Zwischen Eduktstrom (Rohgas) und Produktstrom (Reingas) ist ein erster Wärmetauscher (WT) vorgesehen, in dem der Produktstrom einen Teil der Wärme des Eduktstroms aufnimmt, und diesen abkühlt. Der größte Anteil der Abkühlung erfolgt im Kondensator, der neben der Kühlung auch die große Menge an Kondensationswärme abführen muss (Verhältnis Kondensationswärme/gesamter Kühlungsbedarf ca. 60 %).

Das relativ kalte Produktgas (Brenngas) wird zu einer Gasturbine (2. Teilprozess) geleitet. Dabei ist es jedoch sehr wichtig, dass der Produktstrom einen erhöhten Anteil Dampf enthält, der als Inertgas zur NOx-Reduktion beiträgt. Außerdem steigt der Massenstrom des Brenngases durch den Anteil an Wasserdampf insgesamt und führt somit zu einer größeren abgreifbaren Leistung der Gasturbine. Die Erhöhung des Wasseranteils wird bislang in der Regel durch einen Sättiger durchgeführt und ist aufgrund des niedrigen Wasseranteils des Produktstroms üblicherweise sehr energieintensiv.

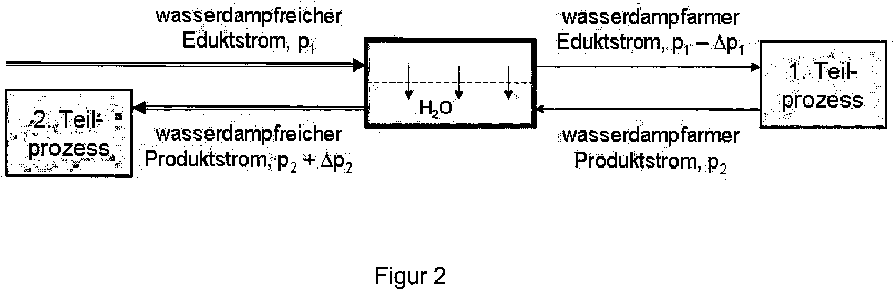

In der Figur 2 ist die prinzipielle Funktionsweise einer Wasserdampf leitenden Membran vor und nach einem ersten Teilprozess dargestellt, vor dem bzw. bei dem der Wasserdampfanteil abgesenkt werden muss. Der in dem ersten Teilprozess nicht benötigte Wasserdampf kann vor dem Teilprozess über eine Membran zumindest teilweise auf den Produktstrom übertragen werden (Bypass) und somit für einen weiteren, Wasserdampf benötigenden zweiten Teilprozess im Gesamtprozess erneut nutzbar gemacht werden. Es entfällt die ansonsten notwendige, zumindest teilweise Kondensation von Wasser und Abkühlung vor dem ersten Teilprozess. Zudem kann damit der Anteil an Wasserdampf, der für den zweiten Teilprozess extra erzeugt werden muss, vorteilhaft entsprechend verringert werden,

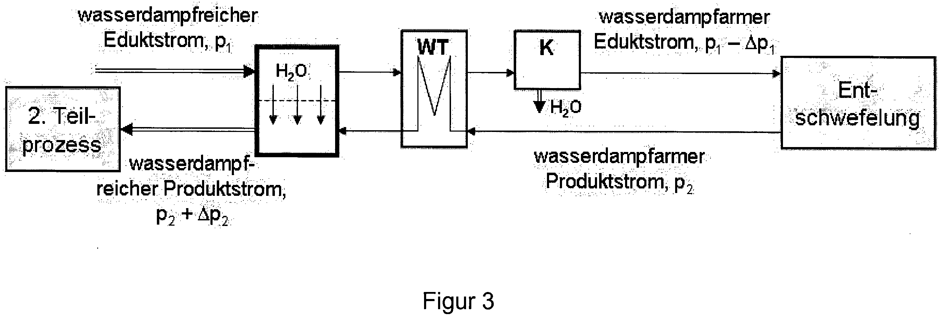

In der Figur 3 ist schematisch eine erfindungsgemäße Ausführung des Verfahrens dargestellt, bei dem vor dem 1. Teilprozess (Entschwefelung eines Rauchgases) dem Eduktgasstrom (Rohgas) mittels einer Wasserdampf leitenden Membran ein Teil des Wasserdampfes entzogen und auf den Produktstrom übertragen wird. Dabei ist es unerheblich, ob bei dem Verfahren vor der Entschwefelung lediglich eine Kondensatoreinheit zur Abtrennung eines Teils des Wassers aus dem Eduktstrom vorgesehen ist, oder zusätzlich auch noch ein weiterer Wärmeaustauscher im Eduktstrom vorgesehen ist.

Mit dem thermodynamischen Simulationsprogramm Aspen Plus wurden zwei Fälle (A und B) für ein 400 MW IGCC berechnet, bei denen das Eduktgas, welches ein bei der jeweiligen Temperatur mit Wasserdampf gesättigtes Synthesegas ist, in einem ersten Teilprozess bei ca. 40 °C entschwefelt werden soll. Im Standardfall wurde zwischen Edukt- und Produktstrom ein Wärmetauscher geschaltet, um einen Teil der Wärme auf den Produktstrom zu übertragen. Im erfindungsgemäßen Fall wurde entsprechend eine wasserdampfselektive Membran (siehe Figur 3) hinzugefügt. Im Falle eines IGCC-Kraftwerks zur Stromproduktion als Gesamtprozess wird durch den übertragenen Wasserdampf eine Wirkungsgradverbesserung von rund 0,5 %- Punkten erreicht. Dieser Wasserdampf muss später nicht mehr im Sättiger zugeführt werden.

Die Rahmenbedingungen für die Simulation waren folgende: Druck des Rohgases (Eduktstrom) vor der Entschwefelung: 2,68 MPa; Druck des Reingases (Produktstrom, nach der Entschwefelung): 2,48 MPa, minimale Triebkraft über die Membran: 100 hPa, Permeanz: 1,0 Nm³/(h*kpa). Für den Edukt- und den Produktstrom sind in der Tabelle 1 jeweils simulierte Stoffdaten zu Temperatur und Wasserdampfgehalt gegenübergestellt, wie sie sich bei einem Verfahren gemäß dem Stand der Technik (SdT) und bei einer erfindungsgemäßen Ausführung ergeben würden. Dabei wurden jeweils identische Eduktströme, ein identischer Wärmeaustauscher (WT) sowie eine identische Entschwefelung angenommen.

**Tabelle 1:**

| | A: SdT | | | A: Erfindung | | |
|---|---|---|---|---|---|---|
| | T [°C] | x [mol-%] | p H₂O [kPa] | T [°C] | x [mol-%] | p H₂O [kPa] |
| **Eduktstrom** | 145 | 11,8 | 316 | 145 | 11,8 | 316 |
| nach Membran | - | - | | 141 | 0,6 | 161 |
| nach Wärmeaustauscher WT | 122 | 8,7 | 233 | 58 | 0,6 | 161 |
| nach Kondensator K | 40 | 0,3 | 80 | 40 | 0,3 | 8,0 |
| **Produktstrom** | | | | | | |
| nach Entschwefelung | 44 | 0,3 | 74 | 44 | 0,3 | 7,4 |
| nach Wärmeaustauscher WT | 130 | 0,3 | 74 | 126 | 0,3 | 7,4 |
| nach Membran | - | - | | 130 | 11,4 | 283 |

| | B: SdT | | | B: Erfindung | | |
|---|---|---|---|---|---|---|
| | T [°C] | x [mol-%] | p H₂O [kPa] | T [°C] | x [mol-%] | p H₂O (kPa] |
| **Eduktstrom** | 157 | 12,6 | 338 | 157 | 12,6 | 338 |
| nach Membran | - | - | | 128 | 0,8 | 21,4 |
| nach Wärmeaustauscher WT | 126 | 9,6 | 257 | 69 | 0,8 | 21,4 |
| nach Kondensator K | 40 | 0,3 | 80 | 40 | 0,3 | 8,0 |
| **Produktstrom** | | | | | | |
| nach Entschwefelung | 49 | 0,5 | 12,4 | 49 | 0,5 | 12,4 |
| nach Wärmeaustauscher WT | 137 | 0,5 | 12,4 | 108 | 0.5 | 12,4 |
| nach Membran | - | - | | 141 | 12,4 | 308 |

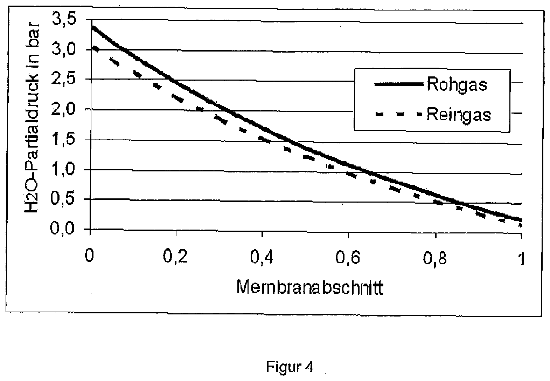

Figur 4 zeigt für den vorgenannten Fall B, bei dem eine wasserdampfselektive Membran vor dem ersten Teilprozess angeordnet ist, den Wasserdampfpartialdruckverlauf auf der Feed- und Permeatseite entlang der im Gegenstrom betriebenen Membran. Es ist zu erkennen, dass aufgrund der annähernd gleichen inerten Stoffmengenströme (inert - ohne Wasserdampf) die Partialdruckdifferenz entlang der gesamten Membran und somit die Triebkraft für den Wasserdampftransport durch die Membran annähernd gleich bleibt. Dadurch kann ein großer Anteil des Wasserdampfes übertragen werden, wodurch die Wasserdampf leitende Membran hier sehr effizient eingesetzt werden kann. Die für die Figur 4 relevanten Daten sind der Tabelle 2 zu entnehmen.

**Tabelle 2:**

| | Rohgas-Eingang | Rohgas-Ausgang | Reingas-Eingang | Reingas-Ausgang |
|---|---|---|---|---|
| Stoffstrom (Gesamt) in mol/s | 3105,4 | 2738,1 | 2698,2 | 3065,5 |
| Stoffstrom (H₂O) in mol/s | 389,8 | 22,5 | 12,8 | 380,1 |
| Anteil H₂O in mol-% | 12,6 | 0,8 | 0,5 | 12,4 |
| Partialdruck H₂O in bar | 3,369 | 0,221 | 0,118 | 3,081 |

Die Erfindung betrifft ein Verfahren zum Betreiben eines ersten Teilprozesses innerhalb eines Gesamtprozesses, wobei dieser Teilprozess prozessbedingt mit weniger Wasserdampf betrieben wird, als im Eduktstrom zu diesem Teilprozess vorhanden ist, und wobei der Wasserdampf an anderer Stelle, das bedeutet für einen zweiten Teilprozess innerhalb des Gesamtprozesses, vorteilhaft benötigt wird.

Erfindungsgemäß ist vorgesehen, dass bezogen auf den ersten Tellprozess eine wasserdampfselektive Membran zwischen dem dampfhaltigen Eduktstrom und dem diesen Teilprozess verlassenden, dampfarmen Produktstrom angeordnet ist, so dass ein großer Teil des für den ersten Teilprozess nicht benötigten Überschussdampfes an diesem vorbeigeschleust werden kann (Bypass), und somit auf einen großen Kondensator und zusätzliche Wärmeaustauscher im Idealfall verzichtet werden kann.

## Patentansprüche

1. Verfahren zum Betreiben eines ersten Teilprozesses mit einem Eduktstrom innerhalb eines Gesamtprozesses,
- bei dem vorgesehen ist, dass vor oder bei dem ersten Teilprozess der Wasserdampfanteil abgesenkt werden muss,
- sowie einer Gasturbine oder eines Shiftsystems als einem zweiten Teilprozesses, der einen wasserdampfhaltigen Produktstrom benötigt,
- wobei ein Eduktstrom in den ersten Teilprozess eingeleitet und ein Produktstrom aus dem ersten Teilprozess herausgeleitet und dem zweiten Teilprozess zugeführt wird,
***dadurch gekennzeichnet*,**
- **dass** der Eduktstrom mit einem Wasserdampf-Partialdruck p₁ vor den Eintritt in den Teilprozess der Retentartseite eines Membranmoduls als Feed zugeführt wird und dieses mit einem verringerten Wasserdampf-Partialdruck p₁-Δp₁ als Retentat verlässt und anschließend dem ersten Teilprozess zugeführt wird, und
- **dass** der den ersten Teilprozess verlassende Produktstrom mit einem Wasserdampf-Partialdruck p₂ der Permeatseite des Membranmoduls zugeführt wird und dieses Membranmodul mit einem erhöhten Wasserdampf-Partialdruck von p₂+ Δp₂ als Permeat verlässt und anschließend der Gasturbine oder dem Shiftsystem dem zweiten Teilprozess zugeführt wird,
- wobei im Membranmodul auf Grund eines Partialdruckgefälles für H₂O von wenigstens 10 hPa Wasserdampf von dem Eduktstrom auf der Retentatseite über eine wasserdampfselektive Membran direkt auf den Produktstrom auf der Permeatseite übergeleitet wird.

2. Verfahren nach Anspruch 1, wobei im Membranmodul ein Partialdruckgefälle für H₂O von wenigstens 50 hPa, vorteilhaft von wenigstens 100 hPa vorliegt.

3. Verfahren nach einem der Ansprüche 1 bis 2, bei dem der Eduktstrom vor Eintritt in das Membranmodul Temperaturen T zwischen 80 °C und 550 °C aufweist, insbesondere Temperaturen zwischen 100 °C und 200 °C.

4. Verfahren nach einem der Ansprüche 1 bis 3, bei dem der Produktstrom vor Eintritt in das Membranmodul Temperaturen T zwischen 20 °C und 550 °C aufweist, insbesondere Temperaturen zwischen 20 °C und 200 °C.

5. Verfahren nach einem der Ansprüche 1 bis 4, bei dem der Eduktstrom vor Eintritt in das Membranmodul einem Wasserdampf-Partialdruck p₁ zwischen 20 kPa und 5 MPa, insbesondere zwischen 200 kPa und 1,5 MPa aufweist.

6. Verfahren nach einem der Ansprüche 1 bis 5, bei dem der Produktstrom vor Eintritt in das Membranmodul einem Wasserdampf-Partialdruck p₂ bis 200 hPa, insbesondere zwischen 10 und 500 hPa aufweist.

7. Verfahren nach einem der Ansprüche 1 bis 6, bei dem der Eduktstrom vor Eintritt in das Membranmodul einen Druck P₁ zwischen 100 kPa und 1 MPa, vorzugsweise zwischen 100 kPa und 3 MPa aufweist.

8. Verfahren nach einem der Ansprüche 1 bis 7, bei dem die Druckdifferenz innerhalb des Membranmoduls über die Membran nicht mehr als 500 kPa, vorzugsweise nicht mehr als 200 kPa beträgt.

9. Verfahren nach einem der Ansprüche 1 bis 8, bei dem eine Polymermembran eingesetzt wird.

10. Verfahren nach einem der Ansprüche 1 bis 9, bei dem eine Kaltgasreinigung bei Temperaturen unterhalb von 200 °C zur Entschwefelung als erster Teilprozess eingesetzt wird.

11. Verfahren nach vorhergehendem Anspruch 1 bis 9, bei dem eine CO₂-Abtrennung als erster Teilprozess eingesetzt wird.

12. Verfahren nach einem der Ansprüche 1 bis 11, bei dem der das Membranmodul als Retentat verlassende Eduktstrom vor Eintritt in den ersten Teilprozess in einem Wärmeaustauscher zusätzlich abgekühlt wird.

13. Verfahren nach vorhergehendem Anspruch, bei dem die Abkühlung in dem Wärmeaustauscher durch den den zweiten Teilprozess verlassenden Produktstrom vor Eintritt in das Membranmodul erfolgt.

14. Verfahren nach einem der Ansprüche 1 bis 13, bei dem der das Membranmodul als Retentat verlassende Eduktstrom vor Eintritt in den ersten Teilprozess in einem Kondensator weiteres Wasser entzogen wird.

## Claims

1. Method for operating a first sub-process with an educt flow within an overall process,
- in which it is provided that the amount of steam must be reduced before or during the first sub-process,
- as well as a gas turbine or a shift system as a second sub-process, which requires a product flow containing steam,
- in which an educt flow is led into the first sub-process and a product flow is led out of the first sub-process and supplied to the second sub-process,
***characterised in that***
- before entering into the sub-process the educt flow with a steam partial pressure of p₁ is supplied to the retentate side of a membrane module as feed and leaves this with a reduced steam partial pressure p₁-Δp₁ as retentate and then is supplied to the first sub-process,
and
- the product flow leaving the first sub-process with a steam partial pressure p₂ is supplied to the permeate side of the membrane module and leaves this membrane module with an increased steam partial pressure of p₂+ Δp₂ as permeate and then is supplied to the gas turbine or the shift system to the second sub-process,
- in which because of a partial pressure fall for H₂0 of at least 10 hPa in the membrane module steam from the educt flow on the retentate side is led through a steam selective membrane directly to the product flow on the permeate side.

2. Method according to claim 1, in which there is a partial pressure fall for H₂O of at least 50 hPa, preferably at least 100 hPa, in the membrane module.

3. Method according to one of claims 1 to 2, in which the educt flow has temperatures T of between 80° C and 550° C, particularly temperatures of between 100° C and 200° C, before entering into the membrane module.

4. Method according to one of claims 1 to 3, in which the product flow has temperatures T of between 20° C and 550° C, particularly temperatures of between 20° C and 200° C, before entering into the membrane module.

5. Method according to one of claims 1 to 4, in which the educt flow has a steam partial pressure p₁ of between 20 kPa and 5 MPa, particularly between 200 kPa and 1.5 MPa, before entering into the membrane module.

6. Method according to one of claims 1 to 5, in which the product flow has a steam partial pressure P₂ of up to 200 hPa, particularly between 10 and 500 hPa, before entering into the membrane module.

7. Method according to one of claims 1 to 6, in which the educt flow has a pressure P₁ of between 100 kPa and 1 MPa, preferably between 100 kPa and 3 MPa, before entering into the membrane module.

8. Method according to one of claims 1 to 7, in which the pressure difference through the membrane within the membrane module amounts to not more than 500 kPa, preferably not more than 200 kPa.

9. Method according to one of claims 1 to 8, in which a polymer membrane is used.

10. Method according to one of claims 1 to 9, in which cold gas cleaning at temperatures below 200° C is used for desulphurisation as a first sub-process.

11. Method according to previous claims 1 to 9, in which CO₂ separation is used as a first sub-process.

12. Method according to one of claims 1 to 11, in which the the educt flow leaving the membrane module as retentate is also cooled in a heat exchanger before entering into the first sub-process.

13. Method according to the previous claim, in which cooling is done in the heat exchanger through the product flow leaving the second sub-process before entering into the membrane module.

14. Method according to one of claims 1 to 13, in which the educt flow leaving the membrane module as retentate has more water removed in a condenser before entering into the first sub-process.

## Revendications

1. Procédé servant à faire fonctionner un premier processus partiel avec un flux de produit de départ dans le cadre d'un processus global,
- lequel prévoit que la proportion de vapeur d'eau doit être abaissée avant ou au cours du premier processus partiel,
- comprenant également une turbine à gaz ou un système shift faisant office d'un deuxième processus partiel, qui requiert un flux de produit contenant de la vapeur d'eau,
- dans lequel un flux de départ est introduit dans le premier processus partiel et un flux de produit résulte du premier processus partiel et est amené au deuxième processus partiel,
**caractérisé en ce**
- **que** le flux de produit de départ présentant une pression partielle de vapeur d'eau p₁ est amené en tant que flux d'alimentation, avant d'entrer dans le processus partiel, au côté de produit de rétention d'un module à membrane et quitte ledit module à membrane avec une pression partielle de vapeur d'eau p₁-Δp₁ réduite en tant que produit de rétention et est ramené ensuite au premier processus partiel, et
- en ce que le flux de produit quittant le premier processus partiel et présentant une pression partielle de vapeur d'eau p₂ est amené au côté de perméat du module à membrane et quitte ledit module à membrane avec une pression partielle de vapeur d'eau augmentée de p₂ + Δp₂ en tant que perméat et est amené ensuite à la turbine à gaz ou au système shift au deuxième processus partiel,
- dans lequel de la vapeur d'eau est transférée du flux de produit de départ sur le côté produit de rétention, en passant par une membrane sélective en matière de vapeur d'eau, directement sur le flux de produit sur le côté de perméat, dans le modulé à membrane du fait d'une baisse de pression partielle pour H₂O d'au moins 10 hPa.

2. Procédé selon la revendication 1, dans lequel une baisse de pression partielle pour du H₂O d'au moins 50 hPa, de manière avantageuse d'au moins 100 hPa est présente dans le module à membrane.

3. Procédé selon l'une quelconque des revendications 1 à 2, dans le cadre duquel le flux de produit de départ présente, avant d'entrer dans le module à membrane, des températures T comprises entre 80 °C et 550 °C, en particulier des températures comprises entre 100 °C et 200 °C.

4. Procédé selon l'une quelconque des revendications 1 à 3, dans le cadre duquel le flux de produit présente, avant d'entrer dans le module à membrane, des températures T comprises entre 20 °C et 550 °C, en particulier des températures comprises entre 20 °C et 200 °C.

5. Procédé selon l'une quelconque des revendications 1 à 4, dans le cadre duquel le flux de produit de départ présente, avant d'entrer dans le module à membrane, une pression partielle de vapeur d'eau p₁ comprise entre 20 kPa et 5 MPa, en particulier entre 200 kPa et 1,5 MPa.

6. Procédé selon l'une quelconque des revendications précédentes 1 à 5, dans le cadre duquel le flux de produit présente, avant d'entrer dans le module à membrane, une pression partielle de vapeur d'eau p₂ pouvant aller jusqu'à 200 hPa, en particulier comprise entre 10 et 500 hPa.

7. Procédé selon l'une quelconque des revendications 1 à 6, dans le cadre duquel le flux de produit de départ présente, avant d'entrer dans le module à membrane, une pression P₁ comprise entre 100 kPa et 1 MPa, de préférence comprise entre 100 kPa et 3 MPa.

8. Procédé selon l'une quelconque des revendications 1 à 7, dans le cadre duquel la pression différentielle à l'intérieur de la membrane à module au-dessus de la membrane présente une valeur égale ou inférieure à 500 kPa, de préférence égale ou inférieure à 200 kPa.

9. Procédé selon l'une quelconque des revendications 1 à 8, dans le cadre duquel une membrane polymère est utilisée.

10. Procédé selon l'une quelconque des revendications 1 à 9, dans le cadre duquel un nettoyage au gaz froid à des températures inférieures à 200 °C est utilisé en tant que premier processus partiel aux fins de la désulfuration.

11. Procédé selon les revendications précédentes 1 à 9, dans le cadre duquel une séparation de CO₂ est utilisée en tant que premier processus partiel.

12. Procédé selon l'une quelconque des revendications 1 à 11, dans le cadre duquel le produit de départ quittant en tant que produit de rétention le module à membrane est refroidi en supplément dans un échangeur de chaleur avant d'entrer dans le premier processus partiel.

13. Procédé selon la revendication précédente, dans le cadre duquel le refroidissement dans l'échangeur de chaleur est effectué par le flux de produit quittant le deuxième processus partiel avant l'entrée dans le module à membrane.

14. Procédé selon l'une quelconque des revendications 1 à 13, dans le cadre duquel le produit de départ quittant en tant que produit de rétention le module à membrane est retiré, avant d'entrer dans le premier processus partiel, dans un condensateur, de l'eau supplémentaire.
